# DEMANDE DE BREVET EUROPEEN

(11) **EP 0 805 090 A1**
(43) Date de publication de la demande: **05.11.1997**
(21) Numéro de dépôt: 97400771.8
(22) Date de dépôt: 03.04.1997
(51) Int. Cl.: B62D 1/16, F16C 33/20

(54) **Dispositif de tenue d'un arbre tournant d'une colonne de direction de véhicule automobile**

(30) Priorité: 03.05.1996 FR 9605677
(71) Demandeur: LEMFORDER NACAM S.A., 41100 Vendome (FR)
(72) Inventeur: Duval, Benoît, 41100 Vendome (FR); Antiguy, Thierry, 37100 Tours (FR); Dupont, Eddy, 41100 Vendome (FR)
(74) Mandataire: Cabinet Martinet & Lapoux

(57) **Abrégé**

Le dispositif de tenue d'un arbre tournant d'une colonne de direction de véhicule automobile dans un élément support (4) est constitué par un palier plastique (5).

Le palier plastique (5) comporte :
- une partie massive (11) avec une embase (12) se prolongeant dans un élément cylindrique externe (13) se montant dans un logement (9) de l'élément support,
- des languettes appartenant à l'embase (12) de la partie massive (11) et disposées à l'intérieur de l'élément cyclindrique externe (13),
- les languettes étant distribuées en deux séries : des languettes longues (15) relativement souples et des languettes courtes (16) relativement rigides qui sont disposées circulairement de manière que sous l'action de faibles efforts radiaux l'arbre tournant soit supporté par les languettes longues (15), et que sous l'action d'efforts radiaux plus importants, l'arbre tournant (1) soit supporté à la fois par les languettes longues (15) et les languettes courtes (16).

## Description

La présente invention se rapporte à un dispositif de tenue d'un arbre tournant d'une colonne de direction de véhicule automobile.

Les dispositifs connus de support et de tenue d'un arbre tournant comportent généralement deux paliers à roulement à bille ou deux paliers lisses en plastique ou en matière métallique. Ces systèmes de tenue présentent l'inconvénient d'avoir une rigidité trop importante dans le sens transversal pour s'adapter à la variation importante des efforts radiaux. Cet inconvénient est particulièrement sensible dans les systèmes de montage et de tenue d'un arbre tournant d'une colonne de direction de véhicule automobile.

Le but de la présente invention est de proposer un dispositif de tenue d'un arbre tournant, qui peut s'appliquer notamment à une colonne de direction de véhicule automobile, qui permette d'assurer une tenue correcte de l'arbre tournant, quelles que soient les variations et l'importance des efforts radiaux qui s'exercent sur cet arbre.

Selon l'invention, le dispositif tenu d'un arbre tournant dans un élément support est caractérisé en ce qu'il est constitué par un palier plastique. Le palier plastique comporte une partie massive avec une embase, qui se prolonge par un élément cylindrique externe. L'élément cylindrique externe se monte dans un logement de l'élément support. Des languettes appartiennent à l'embase de la partie massive, et sont disposées à l'intérieur de l'élément cylindrique externe. Les languettes sont distribuées en deux séries : des languettes longues relativement souples, et des languettes courtes relativement rigides. Les languettes sont disposées circulairement, de manière que sous l'action de faibles efforts radiaux, l'arbre tournant soit supporté par les languettes longues, et que sous l'action d'efforts radiaux plus importants, l'arbre tournant soit supporté à la fois par les languettes longues et les languettes courtes.

Avantageusement selon l'invention, les languettes longues et les languettes courtes sont distribuées alternativement. De plus, l'élément cylindrique externe comporte un clip de maintien, qui est aménagé entre deux encoches. Cet élément cylindrique externe a une forme tronconique de manière à faciliter le montage dans son logement. Enfin, l'élément cylindrique externe est réalisé en trois segments séparés par des encoches.

Dans une réalisation du dispositif de tenue d'un arbre tournant selon l'invention, le palier plastique est monté dans le logement correspondant de l'élément support, et l'arbre tournant vient s'engager dans le palier plastique. Cet arbre tournant reçoit la mâchoire, qui vient s'appliquer contre le palier plastique, qui fait alors office de butée axiale dans un seul sens.

Dans un autre mode de réalisation du dispositif de tenue selon l'invention, le palier plastique est monté dans le logement de l'élément support, et l'arbre tournant est muni d'un épaulement avec une portée. Cette portée vient s'engager dans le palier plastique et elle reçoit la mâchoire, qui vient s'appliquer contre le palier plastique, et qui fait ainsi office de butée axiale dans les deux sens. Ces deux types de réalisation sont particulièrement intéressants dans leur adaptation à une colonne de direction de véhicule automobile.

D'autres caractéristiques et avantages de l'invention ressortiront de la description qui va suivre, donnée à titre d'exemples nullement limitatifs, en référence aux dessins annexés sur lesquels :
- la figure 1 est une vue en coupe axiale de l'ensemble du dispositif de tenue d'un arbre tournant selon l'invention ;
- la figure 2 est une vue en coupe axiale du palier plastique selon l'invention ;
- la figure 3 est une vue suivant III de la figure 2, la figure 2 étant une coupe suivant le plan II-II de la figure 3 ; et
- la figure 4 est une vue en perspective cavalière du palier plastique selon l'invention.

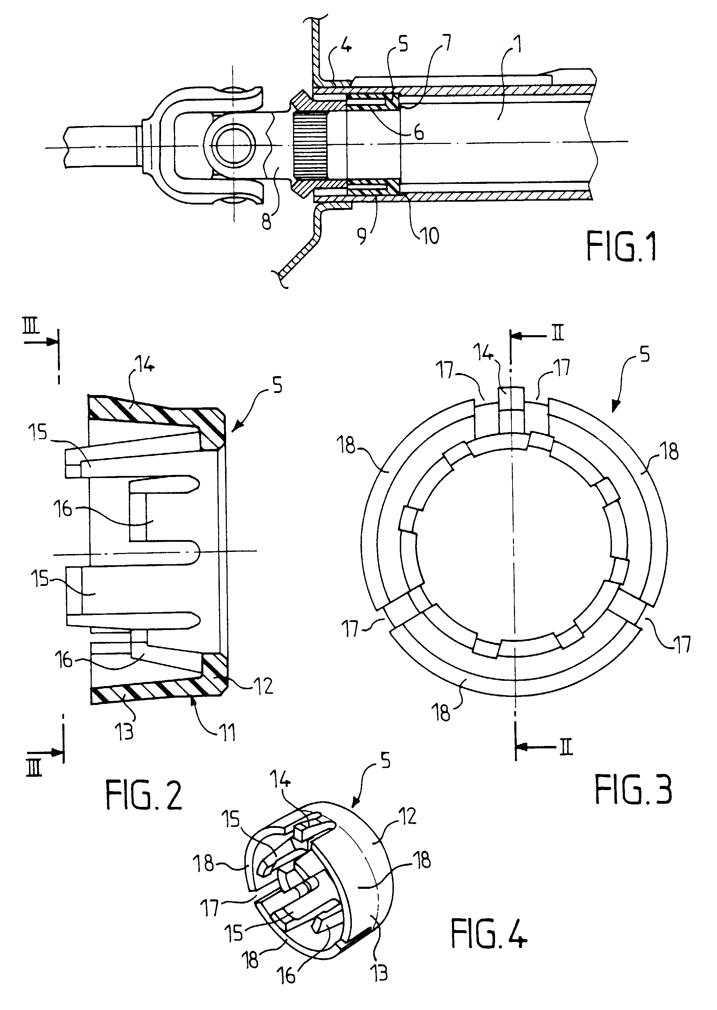

L'ensemble du dispositif de tenue d'un arbre tournant selon l'invention qui est représenté sur la figure 1 s'applique à son montage sur une colonne de direction de véhicule automobile. L'arbre tournant 1 est monté dans un élément support 4 au moyen d'un palier plastique 5.

Comme on peut le voir sur les figures 2, 3 et 4, le palier plastique 5 comporte une partie massive 11, et des languettes référencées 15 et 16. La partie massive 11 est constituée par une embase 12, qui se prolonge par un élément cylindrique externe 13, destiné à se monter dans un logement 9 de l'élément support 4.

Les languettes 15 et 16 appartiennent à l'embase 12 de la partie massive 11, et elles sont disposées à l'intérieur de l'élément cylindrique externe 13.

Les languettes 15 et 16 sont distribuées en deux séries : des languettes longues 15 relativement souples et des languettes courtes 16 relativement rigides. Ces languettes longues 15 et courtes 16 sont disposées circulairement, de manière que sous l'action de faibles efforts axiaux, l'arbre tournant 1 soit supporté par les languettes longues 15, et que sous l'action d'efforts radiaux plus importants, l'arbre tournant 1 soit supporté à la fois par les languettes longues 15 et les languettes courtes 16. Les languettes longues 15 et les languettes courtes 16 sont distribuées alternativement de manière à mieux répartir les efforts.

L'élément cylindrique externe 13 comporte un clip de maintien 14, qui est aménagé entre deux encoches 17 de manière à favoriser le maintien en son logement 9 de l'élément support 4 du palier plastique 5. De plus l'élément cylindrique externe 13 a une forme tronconique afin de faciliter le montage du palier plastique 5 dans son logement 9. L'élément cylindrique externe 13 est en trois segments 18 qui sont séparés les uns par rapport aux autres par des encoches 17.

Dans le montage représenté sur la figure 1, l'arbre tournant 1 est monté sur l'élément support 4, qui est muni d'un logement 9 avec un fond 10. Le palier plastique 5 est monté dans le logement 9 de l'élément support 4, et l'arbre tournant 1 vient s'engager dans le palier plastique 5. Après quoi l'arbre tournant 1 reçoit la mâchoire 8, qui vient s'appliquer contre le palier plastique 5, qui fait alors office de butée axiale dans un seul sens.

Plus précisément dans le mode de réalisation représenté sur la figure 1, l'arbre tournant 1 est muni d'un épaulement 7 avec une portée 6, dans ce cas le palier plastique 5 est monté dans le logement 9 de l'élément support 4, et l'arbre tournant 1 vient s'engager par l'intermédiaire de sa portée 6 dans le palier plastique 5. Cette portée 6 reçoit la mâchoire 8, qui vient s'appliquer contre le palier plastique 5, et qui fait ainsi office de butée axiale dans les deux sens.

Ainsi, le dispositif de tenue d'un arbre tournant selon l'invention comporte un ou deux paliers plastiques qui sont montés sur l'axe de direction d'une colonne de direction de véhicule automobile. Ce palier plastique peut se décomposer en trois parties :
- quatre languettes longues 15 relativement souples, qui portent en temps normal l'arbre tournant,
- quatre languettes courtes 16 relativement rigides,
- une partie massive 11 et un clip de maintien 14.

Les spécificités de ce palier plastique 5 vont de paire avec les parties qui la composent. Les languettes longues 15 permettent le guidage du palier 5 dans l'axe, tandis que les languettes 16 atténuent les efforts radiaux, tout comme la partie massive 11, qui quant à elle, stoppe la déformation radiale.

Les particularités de ce dispositif de tenue selon l'invention sont les suivantes :
- en temps normal, le couple de frottement est faible, mais sous l'effort de la déformation les quatre portées agencées aux extrémités des languettes longues 15 agissant en temps normal, passent à huit lors de l'intervention des quatre autres portées agencées à l'extrémité des languettes courtes 16, ce qui permet d'obtenir une bonne rigidité du palier plastique sous un effort radial ;
- les lèvres permettent une grande tolérance entre l'élément support 4 et l'arbre tournant 1 ;
- le diamètre évolutif de l'élément cylindrique externe 13 de forme tronconique à deux rôles essentiels : il permet l'emmanchement du clip de maintien 14 dans le logement 9 de l'élément support 4, et le rattrapage des dispersions de jeu avec cet élément support 4 ;
- le palier 5 peut jouer la fonction de roulement si il est ajoutée une butée axiale dans les deux sens de montage.

## Revendications

1. Dispositif de tenue d'un arbre tournant (1) dans un élément support (4) caractérisé en ce qu'il est constitué par un palier plastique (5) qui comporte :
- une partie massive (11) avec une embase (12) se prolongeant par un élément cylindrique externe (13) se montant dans un logement (9) de l'élément support (4),
- des languettes appartenant à l'embase (12) de la partie massive (11) et disposées à l'intérieur de l'élément cylindrique externe (13),
- les languettes étant distribuées en deux séries : des languettes longues (15) relativement souples, et des languettes courtes (16) relativement rigides, qui sont disposées circulairement de manière que, sous l'action de faibles efforts radiaux, l'arbre tournant (1) soit supporté par les languettes longues (15), et que, sous l'action d'efforts radiaux plus importants, l'arbre tournant (1) soit supporté à la fois par les languettes longues (15) et les languettes courtes (16).

2. Dispositif de tenue selon la revendication 1, caractérisé en ce que les languettes longues (15) et les languettes courtes (16) sont distribuées alternativement.

3. Dispositif de tenue selon l'une quelconque des revendications précédentes, caractérisé en ce que l'élément cylindrique externe (13) comporte un clip de maintien (14) aménagé entre deux encoches (17).

4. Dispositif de tenue selon l'une quelconque des revendications précédentes, caractérisé en ce que l'élément cylindrique externe (13) a une forme tronconique de manière à faciliter le montage.

5. Dispositif de tenue selon l'une quelconque des revendications précédentes, caractérisé en ce que l'élément cylindrique externe (13) est en trois segments (18) séparés par des encoches (17).

6. Dispositif de tenue selon l'une quelconque des revendications précédentes, caractérisé en ce que le palier plastique (5) est monté dans le logement (9) de l'élément support (4), et que l'arbre tournant (1) vient s'engager dans le palier plastique (5) et reçoit la mâchoire (8), qui vient s'appliquer contre ledit palier plastique (5), qui fait office de butée axiale dans un seul sens.

7. Dispositif de tenue selon l'une quelconque des revendications 1 à 5, caractérisé en ce que le palier plastique (5) est monté dans le logement (9) de l'élément support (4), et que l'arbre tournant (1) est muni d'un épaulement (7) avec une portée (6) qui vient s'engager dans le palier plastique (5) et reçoit la mâchoire (8), qui vient s'appliquer contre ledit palier plastique (5), qui fait office de butée axiale dans les deux sens.

8. Application du dispositif de tenue d'un arbre tournant (1) selon l'une quelconque des revendications précédentes à une colonne de direction de véhicule automobile.
